# EUROPEAN PATENT SPECIFICATION

(11) **EP 1 936 186 B1**
(45) Date of publication and mention of the grant of the patent: **05.08.2015**
(21) Application number: 07123024.7
(22) Date of filing: 12.12.2007
(51) Int. Cl.: F03D 11/00

(54) **Wind turbine and method of detecting asymmetric icing on a wind turbine**
Windenergieanlage und Verfahren zur Detektion asymmetrischer Vereisung einer Windenergieanlage
Eolienne et procédé de détection d'un givrage asymétrique d'une éolienne

(30) Priority: 21.12.2006 US 643456
(43) Date of publication of application: 25.06.2008
(73) Proprietor: GENERAL ELECTRIC COMPANY, Schenectady, NY 12345 (US)
(72) Inventor: Sundermann, Bastian, 14195, Berlin (DE); Siuts, Christian, 10245, Berlin (DE); Oing, Hubert, 14169, Berlin (DE)
(74) Representative: Bedford, Grant Richard

(56) References cited:
- EP-A1- 1 748 185
- DE-A1- 19 528 862
- US-A1- 2005 276 696
- US-B1- 6 890 152

## Description

The present invention relates to ice accumulation occurring on the rotor blades of a wind turbine; and more particularly a method and system for detecting asymmetric icing.

Wind turbines are commonly installed in areas where the climatic conditions allow for ice accumulation (hereinafter icing). Icing on the rotor blades (hereinafter blades) of a wind turbine typically leads to several problems including a reduction in power output; and higher stresses on several components. Icing may be divided into two forms, symmetric (icing on all blades) and asymmetric, (icing on some blades). Asymmetric icing increases the wind turbine tower vibration and also increases the rotorspeed acceleration. Asymmetric icing may also yield a rotor-mass imbalance leading to higher fatigue loads, and thus requiring more robust and expensive wind turbine components.

Current systems of detecting asymmetric icing typically require additional hardware such as sensors, anemometers, piezoelectric transducers, or the like. Moreover, wind turbine operators generally must purchase and install this additional hardware.

Various known systems are described, for example, in DE 195 28 862, US 2005/0276696, US 6,890,152 and EP 1 748 185.

There are a few problems with the current systems and methods for addressing icing. The requirement of additional hardware increases the installation and operational costs of the wind turbine. Furthermore, for geographical areas having an average yearly temperature above freezing, the additional costs associated with detecting asymmetric icing may prohibit wind turbine operation.

For the foregoing reasons, there is a need for a method and system for detecting asymmetric icing utilizing existing wind turbine hardware. The method should not require additional hardware. Furthermore, the method should incorporate rotorspeed data to detect asymmetric icing.

Various aspects and embodiments of the present invention are defined by the appended claims.

Embodiments of the invention will now be described, by way of example, with reference to the accompanying drawings, in which:
Figure 1 is a schematic illustrating the environment in which an embodiment of the present invention operates.
Figures 2A and 2B (collectively Figure 2) are flowcharts illustrating an example of a method of detecting asymmetric icing in accordance with an embodiment of the present invention.
Figure 3 is a flowchart illustrating an example of a method of responding to a detection of asymmetric icing in accordance with an embodiment of the present invention.
Figure 4 is a block diagram of an exemplary system for detecting asymmetric icing in accordance with an embodiment of the present invention.

As will be appreciated by one of ordinary skill in the art, the present invention may be embodied as a method, system, or computer program product. Accordingly, the present invention may take the form of an entirely hardware embodiment, an entirely software embodiment (including firmware, resident software, micro-code, etc.) or an embodiment combining software and hardware aspects all generally referred to herein as a "circuit", "module," or " system. " Furthermore, the present invention may take the form of a computer program product on a computer-usable storage medium having computer-usable program code embodied in the medium.

Any suitable computer readable medium may be utilized. The computer-usable or computer-readable medium may be, for example but not limited to, an electronic, magnetic, optical, electromagnetic, infrared, or semiconductor system, apparatus, device, or propagation medium. More specific examples (a non exhaustive list) of the computer-readable medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device.

Computer program code for carrying out operations of the present invention may be written in an object oriented programming language such as Java7, Smalltalk or C++, or the like. However, the computer program code for carrying out operations of the present invention may also be written in conventional procedural programming languages, such as the "C" programming language, or a similar language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

The present invention is described below with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a public purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer-readable memory that can direct a computer or other programmable data processing apparatus to function in a particular manner, such that the instructions stored in the computer-readable memory produce an article of manufacture including instruction means which implement the function/act specified in the flowchart and/or block diagram block or blocks. The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

The following detailed description of preferred embodiments refers to the accompanying drawings, which illustrate specific embodiments of the invention. Other embodiments having different structures and operations do not depart from the scope of the present invention.

An embodiment of the present invention takes the form of a software application and process that utilizes rotorspeed acceleration to detect asymmetric icing on a wind turbine. The present invention can be applied to many forms of wind turbines (hereinafter turbine) including those located in regions, which may not typically have atmospheric conditions that support icing.

The present invention may be configured to automatically or continuously monitor rotorspeed acceleration while the turbine operates, to determine whether or not asymmetric icing may be occurring. Alternatively, the present invention may be configured to require a user action to initiate operation.

The present invention may function as a stand-alone system. Alternatively, the present invention may be integrated as a module, or the like, within a broader system, such as a turbine control or a plant control system.

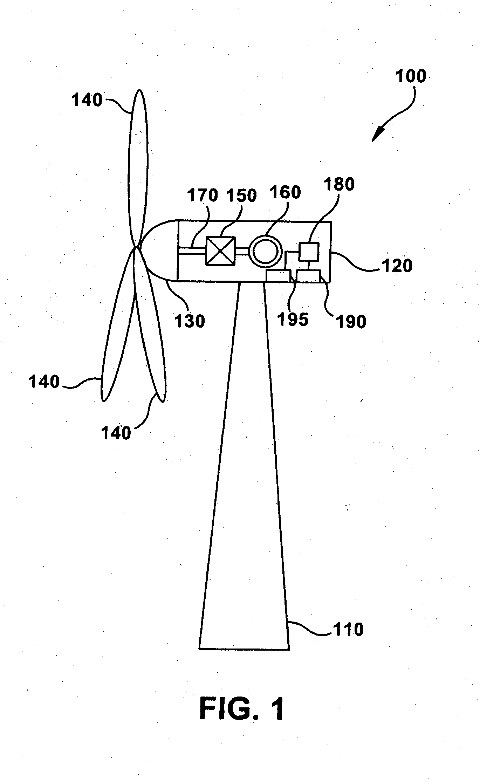

Figure 1 is a schematic illustrating the environment in which an embodiment of the present invention operates. Therein, a turbine 100 includes a tower 110 on which a nacelle 120 is mounted. At a lateral end of the nacelle 120, a hub 130 is mounted which supports a plurality of blades 140. As illustrated, disposed within the nacelle 120 are a gear box 150 and a generator 160. The gear box 150 and the generator 160 are connected to the hub 130 via a drive train 1'70. Furthermore, an asymmetric icing detection system 180 (hereinafter system 180) may also be disposed within the nacelle 120. Communicating with the system 180 is a vibration sensor 190 and a rotorspeed sensor 195. The sensor 190 measures the tower vibration. One advantage of the present invention is that the sensors 190, 195 are typically normal components of a turbine 100. Therefore, a user is not required to purchase, install, and maintain and new sensors.

An embodiment of the system 180 of the present invention may receive rotorspeed data from the rotorspeed sensors 195 to determine whether or not at least one blade 140 may be experiencing icing. In the event that the rotorspeed sensor 195 is not available, the present invention will use the vibration sensor 190 to determine whether or not at least one blade 140 may be experiencing icing.

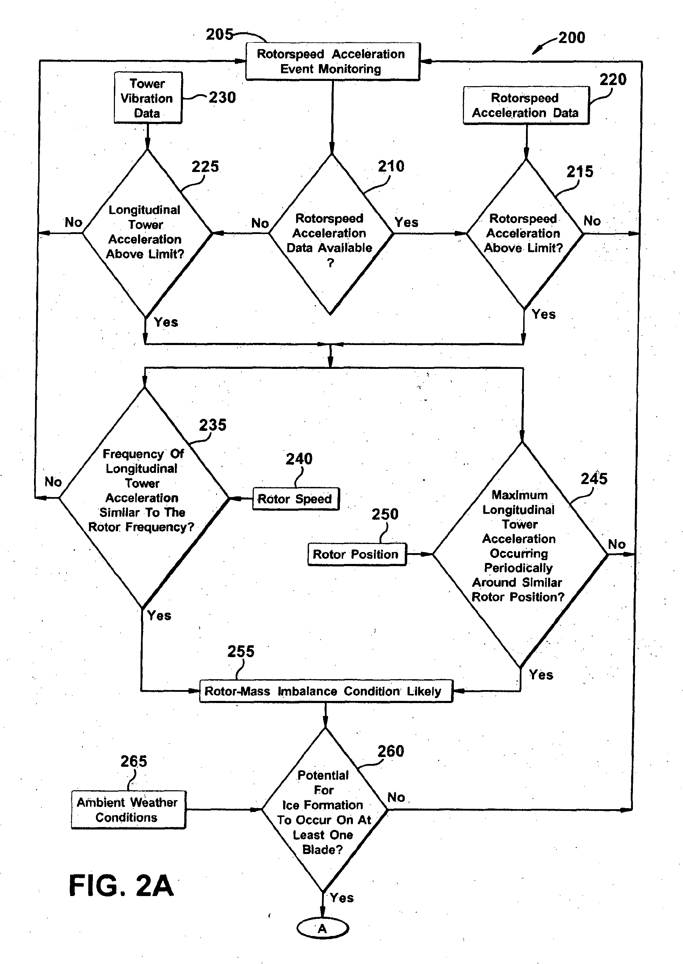

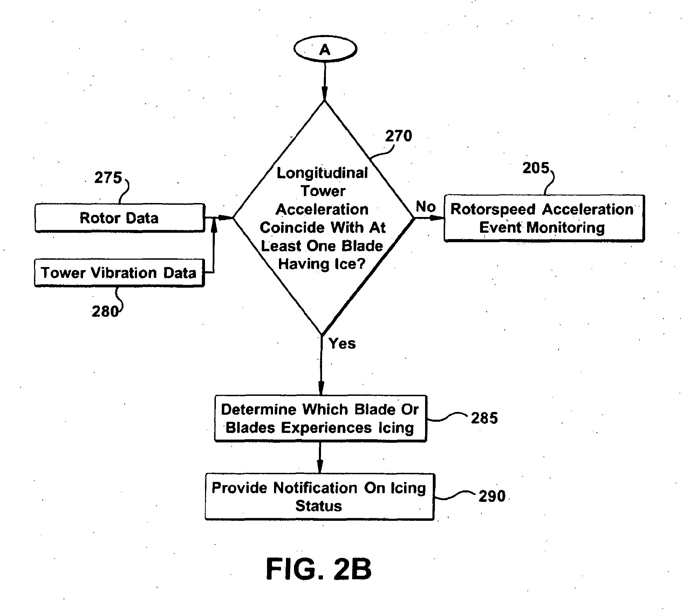

Referring now to Figures 2A and 2B (collectively Figure 2), which are a flowchart illustrating a method 200 of detecting asymmetric icing, in accordance with an embodiment of the present invention. In step 205, the method 200 is enabled to monitoring the activity of a turbine. An embodiment of the method 200 may be configured to continuously operate to determine whether or not icing may be occurring on at least one blade.

In step 210, the method 200 determines whether or not rotorspeed acceleration data is available. If the rotorspeed acceleration is available, then the method 200 proceeds to step 215; otherwise the method 200 proceeds to step 225.

In step 215, the method 200 determines whether or not the rotorspeed acceleration is above a rotorspeed acceleration limit. Step 215 compares actual rotorspeed acceleration data to a preconfigured rotorspeed acceleration limit. Referring back Figure 1, the present invention may receive actual rotorspeed data from rotorspeed sensor 195. Referring again to step 215, the preconfigured rotorspeed acceleration limit may be a user settable parameter. Alternatively, the preconfigured rotorspeed acceleration limit may be received by step 215 from another control system, such as a plant control system, or the like. As illustrated, the method 200 at step 215 receives the rotorspeed acceleration data from step 220. If the rotorspeed acceleration does not exceed the limit, then the method 200 reverts to step 205, otherwise the method 200 proceeds to either step 235 or step 245.

In step 225, the method 200 determines whether or not the longitudinal tower acceleration is above a longitudinal acceleration limit. Step 225 incorporates actual tower vibration data to calculate a longitudinal tower acceleration, which is then compared to a preconfigured longitudinal acceleration limit. Referring back Figure 1, the present invention may receive actual tower vibration data from vibration sensor 190. Referring again to step 225, the preconfigured acceleration limit may be a user settable parameter. Alternatively, the preconfigured acceleration limit may be received by step 225 from another control system, such as a plant control system, or the like. As illustrated, step 225 receives the tower vibration data from step 230. If the lateral tower acceleration does not exceed the limit, then the method 200 reverts to step 205, otherwise the method 200 proceeds to either step 235 or step 245.

The present invention may be utilized on a turbine that has at least one sensor that can provide either rotorspeed data or rotor position data to the method 200. As illustrated, if the present invention is implemented on a turbine having a sensor that provides rotorspeed, then the method 200 proceeds from either step 215 or 225 to step 235; otherwise if the present invention is implemented on a turbine having a sensor that provides rotor position, then the method 200 proceeds from either step 215 or 225 to step 245.

In step 235, the method 200 determines whether or not the frequency of the longitudinal tower acceleration is similar to the rotor frequency. Step 235 compares the frequency of longitudinal tower acceleration of block 225 to the actual rotor speed. As illustrated, step 235 receives the rotorspeed data from step 240. As discussed, the rotorspeed data may be received from a rotorspeed sensor 195 on the turbine. If the frequency of the longitudinal tower acceleration is similar to the actual rotorspeed, then the method 200 proceeds to step 255; otherwise the method 200 reverts to step 205.

In step 245, the method 200 determines whether or not the maximum longitudinal tower acceleration occurs periodically around the same rotor position. Step 230 first determines the value of maximum longitudinal tower acceleration. Next, step 245 determines whether or not that value is repeatedly occurring at or near the same rotor position. As illustrated, step 245 receives the rotor position data from step 250. As discussed, the rotor position data may be received from a preexisting sensor on the turbine. If the maximum longitudinal tower acceleration is repeatedly occurring at or near the same rotor position, then the method 200 proceeds to step 255; otherwise the method 200 reverts to step 205.

In step 255, the method 200 has determined that a rotor-mass imbalance condition is likely. The method 200 may be configured to provide a notification that a rotor-mass imbalance condition is likely. The notification may be an alarm of varying forms such as, but not limited to, an audio signal, a graphic, or a text message.

In step 260, the method 200 determines whether or not there is a potential for icing on at least one blade. Step 260 utilizes ambient weather condition data to determine whether or not icing could occur. For example, but not limited to, an embodiment of the present invention may utilize temperature, humidity, and air pressure in determining whether or not icing may occur. As illustrated, step 260 receives the ambient weather condition data from step 265. Turbines typically have hardware that provides ambient weather condition data and thus the present invention does not require additional hardware. If step 260 determines that the ambient weather conditions support icing, then the method 200 proceeds to step 270; otherwise the method 200 reverts to step 205.

In step 270, the method 200 determines whether or not the actual longitudinal tower acceleration coincides with longitudinal tower accelerations due to at least one blade having ice. As illustrated, step 270 receives rotor data (such as rotor position or rotorspeed) from step 275, and tower vibration data from step 280. Next, step 270 utilizes the received data to calculate a range of longitudinal tower accelerations that may result from icing on at least one blade. The calculated longitudinal tower accelerations are then compared to either the actual rotorspeed acceleration determined in step 215, or the actual longitudinal tower acceleration determined in step 225, (whichever is available). Alternatively, an embodiment of the present invention may compare the actual longitudinal tower acceleration to a previously stored or estimated value. If the step 270 determines that either the actual rotorspeed acceleration or the longitudinal tower acceleration coincide with the calculated longitudinal tower accelerations, then the method 200 proceeds to step 285; otherwise the method 200 reverts to step 205. Alternatively, if step 270 determines that the actual longitudinal tower acceleration coincides with the estimated or stored longitudinal tower accelerations, then the method 200 proceeds to step 285; otherwise the method 200 reverts to step 205.

In steps 285, the method 200 determines which blades or blades may be experiencing icing. For example, but not limited to, the method 200 in step 285 may determine if icing occurs on a blade1, or a blade2, or a blade3, or any and all combinations thereof. Furthermore, in step 290, the method 200 may provide notification of which blade or blades may be experiencing icing. Similar to step 255, the notification may be an alarm of varying forms such as, but not limited to, an audio signal, a graphic, or a text message. Furthermore, the method 200 may be configured to transmit the icing status to other control systems, such as the turbine control system, plant control system, or the like.

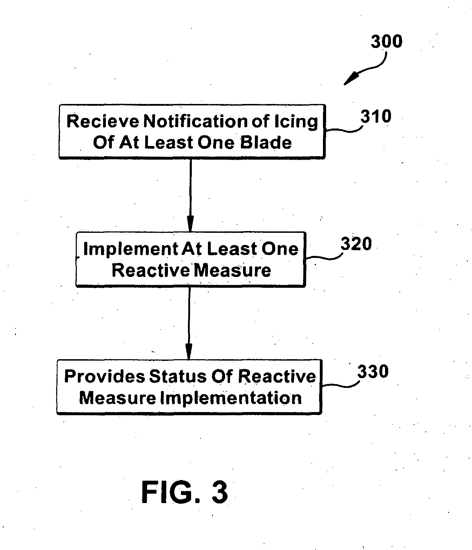

Referring now to Figure 3, which is a flowchart illustrating an example of a method of responding to a detection of asymmetric icing in accordance with an embodiment of the present invention.

In block 310, the method 300, receives a notification of icing of at least one blade from the method 200. Here, the method 300 may take the form of a control system. The control system may include for example, but not limited to, a turbine control system, a plant control system, or the like. The notification may be received by the control system, for example, but not limited to, via a wired, wireless, or other forms of electronically transmitting the notification.

In block 320, the method 300, may implement at least one reactive measure to reduce or remove the icing. A reactive measure may include for example, but not limited to, reducing the rotor speed, lowering a power generation set point, braking procedures, or the like.

In block 330, the method 300, provides a status notification on the reactive measure (s) that was implemented. The notification may be an alarm of varying forms such as, but not limited to, an audio signal, a graphic, or a text message.

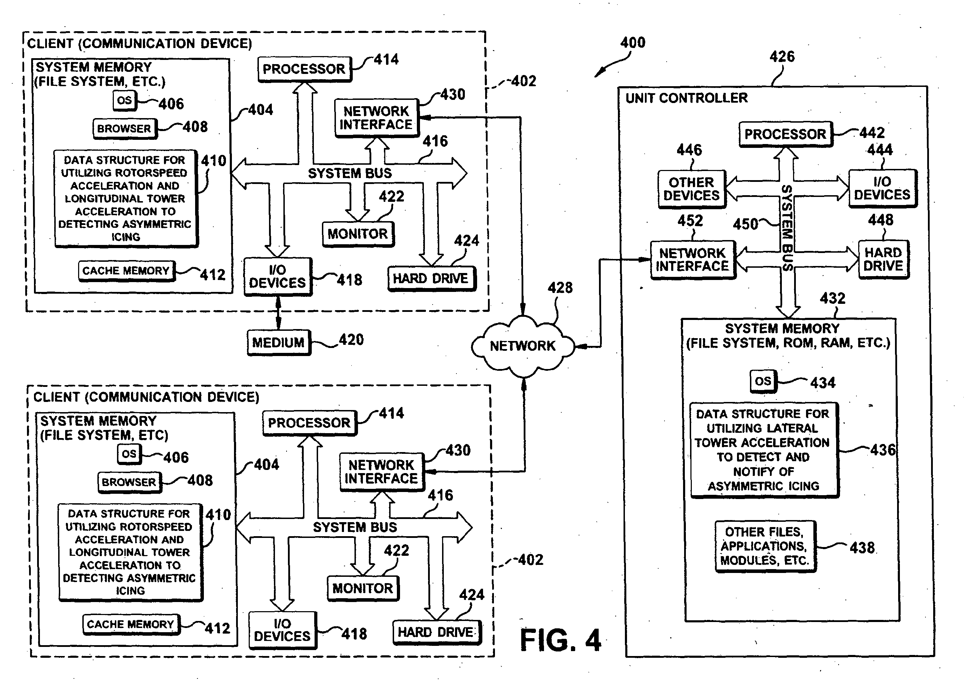

Figure 4 is a step diagram of an exemplary system 200 to detect asymmetric icing in accordance with an embodiment of the present invention. The elements of the method 200 may be embodied in and performed by the system 400. The system 400 may include one or more user or client communication devices 402 or similar systems or devices (two are illustrated in Figure 4). Each communication device 402 may be for example, but not limited to a computer system, a personal digital assistant, a cellular phone, or similar device capable of sending and receiving an electronic message.

The communication device 402 may include a system memory 404 or local file system. The system memory 404 may include for example, but not limited to, a read only memory (ROM) and a random access memory (RAM). The ROM may include a basic input/output system (BIOS). The BIOS may contain basic routines that help to transfer information between elements or components of the communication device 402. The system memory 404 may contain an operating system 406 to control overall operation of the communication device 402. The system memory 404 may also include a browser 408 or web browser. The system memory 404 may also include data structures 410 or computer-executable code to detect asymmetric icing that may be similar or include elements of the method 200 in Figures 2A and 2B.

The system memory 404 may further include a template cache memory 412, which may be used in conjunction with the method 200 in Figures 2A and 2B to automatically store data from the most recent asymmetric icing detection.

The communication device 402 may also include a processor or processing unit 414 to control operations of the other components of the communication device 402. The operating system 406, browser 408, data structures 410 may be operable on the processor 414. The processor 414 may be coupled to the memory system 404 and other components of the communication device 402 by a system bus 416.

The communication device 402 may also include multiple input devices, output devices or combination input/output devices 418. Each input/output device 418 may be coupled to the system bus 416 by an input/output interface (not shown in Figure 4). The input and output devices or combination I/O devices 418 permit a user to operate and interface with the communication device 402 and to control operation of the browser 408 and data structures 410 to access, operate and control the software to automatically store data from the most recent asymmetric icing detection. The I/O devices 418 may include a keyboard and computer pointing device or the like to perform the operations discussed herein.

The I/O devices 418 may also include disk drives, optical, mechanical, magnetic, or infrared input/output devices, modems or the like. The I/O devices 418 may be used to access a medium 420. The medium 420 may contain, store, communicate or transport computer-readable or computer-executable instructions or other information for use by or in connection with a system, such as the communication devices 402.

The communication device 402 may also include or be connected to other devices, such as a display or monitor 422. The monitor 422 may be used to permit the user to interface with the communication device 402.

The communication device 402 may also include a hard disk drive 424. The hard drive 424 may be coupled to the system bus 416 by a hard drive interface (not shown in Figure 4). The hard drive 424 may also form part of the local file system or system memory 404. Programs, software and data may be transferred and exchanged between the system memory 404 and the hard drive 424 for operation of the communication device 402.

The communication devices 402 may communicate with a remote server 426 and may access other servers or other communication devices similar to communication device 402 via a network 428. The system bus 416 may be coupled to the network 428 by a network interface 430. The network interface 430 may be a modem, Ethernet card, router, gateway or the like for coupling to the network 428. The coupling may be a wired connection or wireless. The network 428 may be the Internet, private network, an intranet or the like.

The server 426 may also include a system memory 432 that may include a file system, ROM, RAM, and the like. The system memory 432 may include an operating system 434 similar to operating system 406 in communication devices 402. The system memory 432 may also include data structures 436 to automatically store data from the most recent asymmetric icing detection. The data structures 436 may include operations similar to those described with respect to the method 200 for detecting asymmetric icing in accordance with an embodiment of the present invention. The server system memory 432 may also include other files 438, applications, modules, and the like.

The server 426 may also include a processor 442 or a processing unit to control operation of other devices in the server 426. The server 426 may also include I/O device 444. The I/O devices 444 may be similar to I/O devices 418 of communication devices 402. The server 426 may further include other devices 446, such as a monitor or the like to provide an interface along with the I/O devices 444 to the server 426. The server 426 may also include a hard disk drive 448. A system bus 450 may connect the different components of the server 426. A network interface 452 may couple the server 426 to the network 428 via the system bus 450.

The flowcharts and step diagrams in the Figures illustrate the architecture, functionality, and operation of possible implementations of systems, methods and computer program products according to various embodiments of the present invention. In this regard, each step in the flowchart or step diagrams may represent a module, segment, or portion of code, which comprises one or more executable instructions for implementing the specified logical function(s). It should also be noted that, in some alternative implementations, the functions noted in the step may occur out of the order noted in the figures. For example, two steps shown in succession may, in fact, be executed substantially concurrently, or the steps may sometimes be executed in the reverse order, depending upon the functionality involved. It will also be noted that each step of the block diagrams and/or flowchart illustration, and combinations of steps in the block diagrams and/or flowchart illustration, can be implemented by special purpose hardware-based systems which perform the specified functions or acts, or combinations of special purpose hardware and computer instructions.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

## Claims

1. A method (200) of detecting asymmetric icing on a wind turbine (100), the method comprising:
a) providing (205) a rotorspeed acceleration monitoring system;
b) determining (215) from the rotorspeed acceleration monitoring system whether a rotorspeed acceleration is above a rotorspeed acceleration limit;
c) determining (255) that a rotor-mass imbalance condition exists by:
i) comparing (235) a frequency of longitudinal tower acceleration to an actual rotor speed (240) and determining that the frequency of longitudinal tower acceleration is similar to a rotor frequency; or
ii) determining (245) that a maximum longitudinal tower acceleration occurs periodically around a similar rotor position (250);
d) determining (260) from ambient weather conditions (265) that potential for ice formation to occur on at least one blade (140) exists; and
e) determining (270) that a longitudinal tower acceleration coincides with said at least one blade (140) having icing.

2. The method (200) of claim 1 further comprising, if rotorspeed acceleration data (220) is not available:
receiving (230) tower vibration data;
determining (225) whether a longitudinal tower acceleration is above a longitudinal acceleration limit; and
if the longitudinal tower acceleration is above the longitudinal acceleration limit, moving to step c).

3. The method (200) of any preceding claim further comprising receiving the rotor speed (240) from a rotorspeed sensor (195) on the wind turbine (100).

4. The method (200) of any preceding claim further comprising receiving the rotor position (250) from a sensor (190) on the wind turbine (100).

5. The method (200) of any preceding claim wherein determining (270) that a longitudinal tower acceleration coincides with said at least one blade (140) having icing comprises:
receiving (275) rotor data;
receiving (280) tower data; and
calculating a range of longitudinal tower accelerations that may result from icing on at least one blade (140) using the received rotor and tower data.

6. The method (200) of any preceding claim further comprising:
f) determining (285) which blade or blades (140) are experiencing icing.

7. The method (200) of claim 6 further comprising:
g) providing (290) notification of which blade or blades (140) are experiencing icing.

8. A wind turbine (100) comprising:
a tower (110);
a nacelle (130);
a plurality of blades (140); and
an asymmetric icing detection system (180) operable to detect asymmetric icing on the wind turbine (100) by implementing the method (200) according to any preceding claim.

## Patentansprüche

1. Verfahren (200) zum Erfassen von asymmetrischem Vereisen auf einer Windenergieanlage (100), wobei das Verfahren Folgendes umfasst:
a) Bereitstellen (205) eines Rotordrehzahl-Beschleunigungs-Überwachungssystems;
b) Bestimmen (215), aus dem Rotordrehzahl-Beschleunigungs-Überwachungssystem, ob eine Rotordrehzahl-Beschleunigung über einem Rotordrehzahl-Beschleunigungs-Grenzwert liegt;
c) Bestimmen (255), dass ein Rotor-Massen-Ungleichgewicht vorliegt, durch:
i) Vergleichen (235) einer Frequenz einer Längsmastbeschleunigung mit einer tatsächlichen Rotordrehzahl (240) und Bestimmen, dass die Frequenz der Längsmastbeschleunigung einer Rotorfrequenz ähnlich ist; oder
ii) Bestimmen (245), dass eine maximale Längsmastbeschleunigung periodisch um eine ähnliche Rotorposition (250) herum auftritt;
d) Bestimmen (260) aus Umgebungswetterbedingungen (265), dass die Möglichkeit für Eisbildung auf wenigstens einem Rotorblatt (140) vorliegt; und
e) Bestimmen (270), dass eine Längsmastbeschleunigung zusammen mit der Vereisung wenigstens eines Rotorblatts (140) auftritt.

2. Verfahren (200) nach Anspruch 1, ferner umfassend, falls keine Rotordrehzahl-Beschleunigungsdaten (220) vorliegen:
Erhalten (230) von Mastvibrationsdaten;
Bestimmen (225), ob eine Längsmastbeschleunigung einen Längsbeschleunigungsgrenzwert überschreitet; und
falls die Längsmastbeschleunigung über dem
Längsbeschleunigungsgrenzwert liegt, Übergehen zu Schritt c).

3. Verfahren (200) nach einem der vorhergehenden Ansprüche, ferner umfassend das Erhalten der Rotordrehzahl (240) von einem Rotordrehzahlsensor (195) an der Windenergieanlage (100).

4. Verfahren (200) nach einem der vorhergehenden Ansprüche, ferner umfassend das Erhalten der Rotorposition (250) von einem Sensor (190) an der Windenergieanlage (100).

5. Verfahren (200) nach einem der vorhergehenden Ansprüche, wobei das Bestimmen (270), dass eine Längsmastbeschleunigung zusammen mit der Vereisung wenigstens eines Rotorblatts (140) auftritt, Folgendes umfasst:
Erhalten (275) von Rotordaten;
Erhalten (280) von Mastdaten; und
Berechnen eines Bereichs von Längsmastbeschleunigungen, die aus Vereisung auf wenigstens einem Rotorblatt (140) resultieren können, unter Einsatz der erhaltenen Rotor- und Mastdaten.

6. Verfahren (200) nach einem der vorhergehenden Ansprüche, ferner umfassend:
f) Bestimmen (285), auf welchem Rotorblatt oder auf welchen Rotorblättern (140) Vereisungen vorliegen.

7. Verfahren (200) nach Anspruch 6, ferner umfassend:
g) Bereitstellen (290) einer Mitteilung dazu, auf welchem Rotorblatt oder auf welchen Rotorblättern (140) Vereisungen vorliegen.

8. Windenergieanlage (100), Folgendes umfassend:
einen Mast (110);
eine Gondel (130);
mehrere Rotorblätter (140); und
ein Erfassungssystem für asymmetrische Vereisung (180), funktionsfähig, um asymmetrische Vereisung auf der Windenergieanlage (100) zu erfassen, durch Einsetzen des Verfahrens (200) nach einem der vorhergehenden Ansprüche.

## Revendications

1. Procédé (200) de détection de givrage asymétrique sur une éolienne (100), le procédé comprenant les étapes consistant à :
a) fournir (205) un système de surveillance d'accélération de la vitesse du rotor ;
b) déterminer (215) à partir du système de surveillance d'accélération de la vitesse du rotor si l'accélération de la vitesse du rotor se situe au-dessus d'une limite d'accélération de la vitesse du rotor ;
c) déterminer (255) qu'il existe un état de déséquilibre massique du rotor :
i) en comparant (235) une fréquence d'accélération longitudinale de la tour à une vitesse réelle du rotor (240) et en déterminant que la fréquence d'accélération longitudinale de la tour est similaire à une fréquence du rotor ; ou
ii) en déterminant (245) qu'une accélération longitudinale maximum de la tour se produit périodiquement autour d'une position similaire (250) du rotor ;
d) déterminer (260) à partir des conditions météorologiques ambiantes (265) qu'il existe sur au moins une pale (140) un potentiel de formation de givre ; et
e) déterminer (270) qu'une accélération longitudinale de la tour coïncide avec ladite au moins une pale (140) présentant un givrage.

2. Procédé (200) selon la revendication 1, comprenant en outre, si les données d'accélération (220) de la vitesse du rotor ne sont pas disponibles :
la réception (230) de données de vibration de la tour ;
la détermination (225) visant à indiquer si une accélération longitudinale de la tour se situe au-dessus d'une limite d'accélération longitudinale ; et,
si l'accélération longitudinale de la tour se situe au-dessus de la limite d'accélération longitudinale, un déplacement à l'étape c).

3. Procédé (200) selon l'une quelconque des revendications précédentes, comprenant en outre la réception de la vitesse (240) du rotor d'un capteur de vitesse de rotor (195) sur l'éolienne (100).

4. Procédé (200) selon l'une quelconque des revendications précédentes, comprenant en outre la réception de la position (250) du rotor d'un capteur (190) sur l'éolienne (100).

5. Procédé (200) selon l'une quelconque des revendications précédentes, dans lequel la détermination (270) qu'une accélération longitudinale de la tour coïncide avec ladite au moins une pale (140) ayant du givre comprend :
la réception (275) de données du rotor ;
la réception (280) de données de la tour ; et
le calcul d'une plage d'accélérations longitudinales de la tour qui peuvent résulter du givrage sur au moins une pale (140) en utilisant les données reçues du rotor et de la tour.

6. Procédé (200) selon l'une quelconque des revendications précédentes, comprenant en outre :
f) la détermination (285) de la pale ou des pales (140) qui présentent un givrage.

7. Procédé (200) selon la revendication 6, comprenant en outre :
g) la fourniture (290) de la notification de la pale ou des pales (140) qui présentent un givrage.

8. Eolienne (100) comprenant :
une tour (110) ;
une nacelle (130) ;
une pluralité de pales (140) ; et
un système de détection de givrage asymétrique (180) qui est à même de détecter un givrage asymétrique sur l'éolienne (100) en mettant en oeuvre le procédé (200) selon l'une quelconque des revendications précédentes.
